# EUROPEAN PATENT SPECIFICATION

(11) **EP 0 612 696 B1**
(45) Date of publication and mention of the grant of the patent: **27.08.1997**
(21) Application number: 94870035.6
(22) Date of filing: 23.02.1994
(51) Int. Cl.: C02F 3/16

(54) **Method and device for controlled motion of water in water basins**
Verfahren und Vorrichtung zur kontrollierten Bewegung von Wasser in Wasserbecken
Procédé et dispositif pour mouvement contrôlé de l'eau dans les cuves d'eau

(30) Priority: 24.02.1993 BE 9300172
(43) Date of publication of application: 31.08.1994
(73) Proprietor: Aquasystems International N.V., 1500 Halle (BE)
(72) Inventor: Haegeman, Johny Hector, 1500 Halle (BE)
(74) Representative: Overath, Philippe

(56) References cited:
- EP-A- 0 366 644
- CH-A- 314 316
- DE-A- 3 418 742
- US-A- 3 218 042
- US-A- 3 814 395

## Description

This invention concerns a method and a device for controlling the water motion in water basins and in particular in waste water basins.

Aerators and/or mixers of various types have been described by the applicant in various documents. For example, Belgian patent 884.216 describes an aerator consisting of a power source mounted on a float and driving a shaft to which is attached a stirring organ consisting of a propeller with fixed or rotating diffusion head. According to another embodiment (Belgian patent 893.687), the stirring organ consists of a combined impeller organ, consisting of a centrifugal impeller and a screw (screw pump).

According to Belgian patent 88.01233 (publication 1002575A5), the device is equipped with a second float, and the degree of submersion can be altered so that the device can be used either as an aerator or as a mixer.

Surface aerators with a screw wheel or impeller organ normally make use of a suction cone without any guidance system, in order to lead the water to the pump housing.

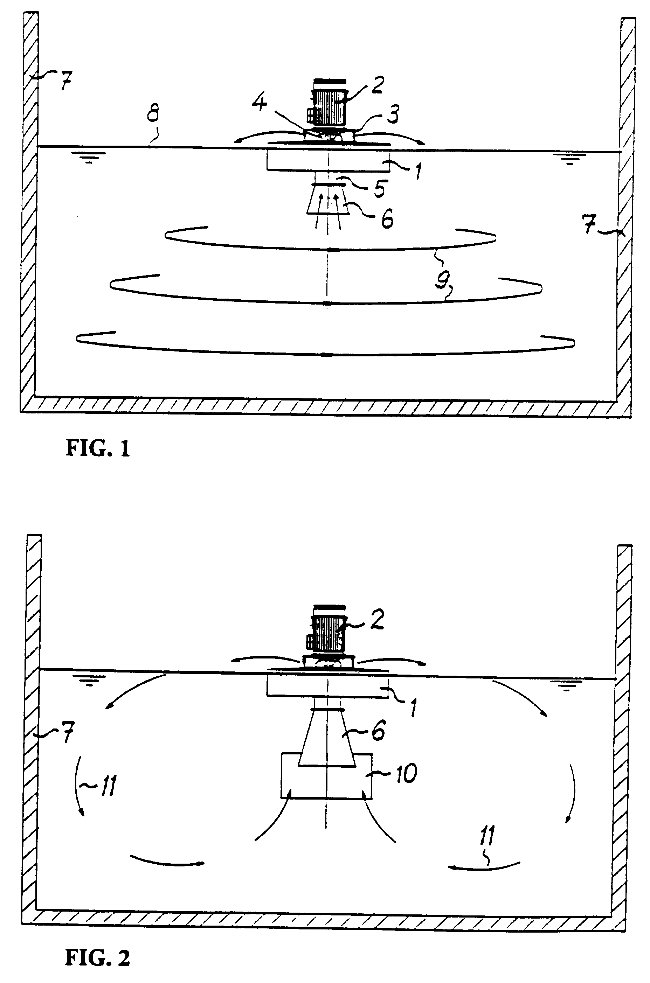

Since in addition to giving an upwards motion to the water sucked in, the impeller also gives the water a rotation motion in the pump housing, a vortex is freely induced underneath said suction cone. This vortex propagates itself as a result of friction between the different liquid layers, finally giving a horizontal rotation motion (fig. 1) to the entire basin. This favourably influences the mixing of the bottom layer, but the exchange between the oxygen-rich surface layer and the bottom layer is insufficient, so that the oxygen input performance is negatively influenced.

For this reason, a cross is placed underneath the suction cone, consisting of one or more flat, vertical plates. Under the influence of this cross, a rotation motion is given to the water in each vertical plane through the vertical axis of the aerator, extending from the aerator to the wall, then to the bottom and back to the aerator (fig. 2). This gives maximum renewal of the surface and thus maximum oxygen input. However, the horizontal rotation motion which the vortex gives to the water in the basin is almost lost, so that mixing of the bottom layer is reduced. Since the horizontal motion is disturbed, the liquid must rise steeply from the bottom back to the device under the influence of the suction force, with the result that precipitable components - such as active sludge - cannot follow this motion completely, so that there is settling on the bottom. The input of oxygen is maximum, but it is not transferred efficiently to the active sludge, because the latter partially settles.

From the above it can be seen that aerators and/or mixers either give good mixing but have problems with oxygen transfer, or achieve good oxygen transfer by means of a cross but give insufficient mixing.

The aim of this invention is to provide aerators and/or mixers that give both good mixing and good oxygen transfer. In order to achieve this aim, according to the invention means are attached which allow the horizontal and vertical rotation motion to be combined to achieve a controlled and directed flow in the basin.

In the description hereafter one should understand by "combined rotational motion" "a combined horizontal and vertical rotational motion of the water which is formed like an helicoïdal movement having an axis which forms a curve around the device or its extension". Such a movement could for instance approach the form of a toroïdal helix.

Surprisingly, it is found that when the cross which normally consists of flat, vertical plates is replaced by a cross with angled plates, a combined rotational motion of the water is obtained. More generally, this combined motion can also be obtained when guide means are attached on the device.

It is to be noted that US patent Nr 3.814.395 describes guiding vanes for improving the movement of the water. However this guiding vanes which are part of a flow cone cooperating with the axis of rotation of a rotor and placed on the floor of a tank can only improve the horizontal movement of the water in a gradually upward direction and cannot give the water the rolling movement necessary for improved oxygen transfer and improved mixing properties

According to the invention, said guide means preferably consist of screw-shaped guide elements, or of several plates fixed at a suitable angle.

According to a preferred embodiment, screw-shaped guide elements are used, consisting of one or more vanes or flights whose pitch, diameter and number of revolutions can all be freely determined. Said parameters will be chosen by the man skilled in the art, in accordance with the power of the device and the dimensions of the basin.

It is also possible to have a variable pitch and/or variable diameter of the vanes. Said screw-shaped guide elements can be placed in or round the suction cone, if existing. In the case of devices without pump housing, the guide elements can be placed round the impeller organ.

According to another advantageous embodiment of the invention, the guide elements consist of plates mounted at an appropriate angle with respect to the aerators, with curved plates preferably being used; however, these plates can also be flat. In order to achieve maximum guidance, the shape and dimensions of the plates will be chosen by the man skilled in the art, according to the type of device, its power and the size of the basin.

The plates can have any desired shape, and be mounted at any desired place on the device.

The invention is described below in more detail, with the help of a series of non-limitative examples, with reference to the accompanying drawings, which represent the following:
- Fig. 1 :: diagram of an aerator with an impeller organ, showing the horizontal rotational motion of the water.
- Fig. 2 :: diagram of the same aerator, showing the vertical rotational motion of the water.
- Fig. 3 :: diagram of the rotational motion obtained according to the invention.
- Figs. 4 and 5 :: schematic view of two embodiments with a screw-shaped guide mounted round the suction cone and pump housing of an aerator with centrifugal screw impeller.
- Figs. 6 to 8 :: schematic view (with underneath view in figs. 6 and 7) of a plate-shaped guide on the outside of the suction cone of the aerator.
- Fig. 9 :: front and side view and an underneath view of a plate-shaped guide in the suction cone of an aerator.
- Figs. 10 and 11 :: schematic views of a plate-shaped guide on the inside of the suction cone.
- Figs. 12 to 18 :: schematic views of different embodiments of a screw-shaped guide mounted in the suction cone of an aerator with centrifugal screw impeller.
- Figs. 19 and 20 :: schematic view of two embodiments of a screw-shaped guide mounted underneath the pump housing of an aerator without suction cone.
- Figs. 21 to 24 :: views of four other variants with screw-shaped guide applied in figs. 21 and 22 in the case of an aerator with a partial pump housing, and in figs. 23 and 24 in the case of an aerator without pump housing.
- Figs. 25 :: front and side elevations of a further variant of an aerator without pump housing, with plate-shaped guide.

With reference to fig. 1, this shows an aerator with centrifugal screw impeller. The aerator consists of a float 1 on which a motor 2 is mounted by means of an intervening flange 3, with the shaft of the motor driving a centrifugal screw impeller 4 which is surrounded by a pump housing 5; a suction cone 6 is mounted underneath the pump housing. This aerator is located in a basin 7 with water surface 8. As a result of the centrifugal screw impeller rotation, the water is sucked up through the cone and distributed over the water surface 8 via the centrifugal part of the impeller screw. The water sucked up is given a rotational motion by the impeller, creating a vortex underneath the cone, and through friction giving a horizontal rotation motion (arrows 9) to the water in the entire basin.

According to prior art (fig. 2), a cross 10 with vertical surfaces is mounted underneath the cone 6, so that the rotational motion of the water in the basin becomes vertical (arrows 11).

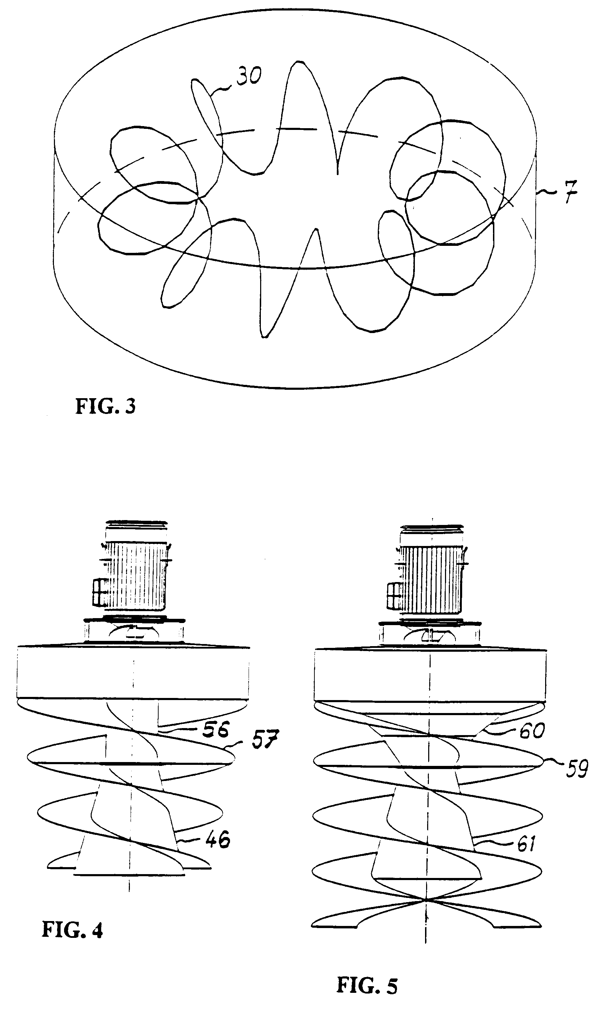

The rotation motion obtained by the invention can be represented by the curve 30 in fig. 3, representing a combined horizontal and vertical motion - also known as a waltzing or roller motion - of the water in the basin 7.

This waltzing motion is obtained by means of a screw-shaped or plate-shaped guide.

In order to simplify the explanation, the guides in figs. 4 to 25 are described as applied with a device of the type described in fig. 1.

Fig. 4 shows an apparatus with a double-threaded, screw-shaped guide 57 with varying diameter, located round the pump housing 56 and the cone 46. Such a screw-shaped guide can of course also be single-threaded or have a constant diameter, or have a varying diameter which increases or decreases from top to bottom, or which continues below the cone or can be placed only round the cone or only partly round the cone.

Fig. 5 shows a device in which the bottom side of the float (60) is cone-shaped and in which the screw-shaped guide 59 is double-threaded with constant diameter and continues below the cone 61.

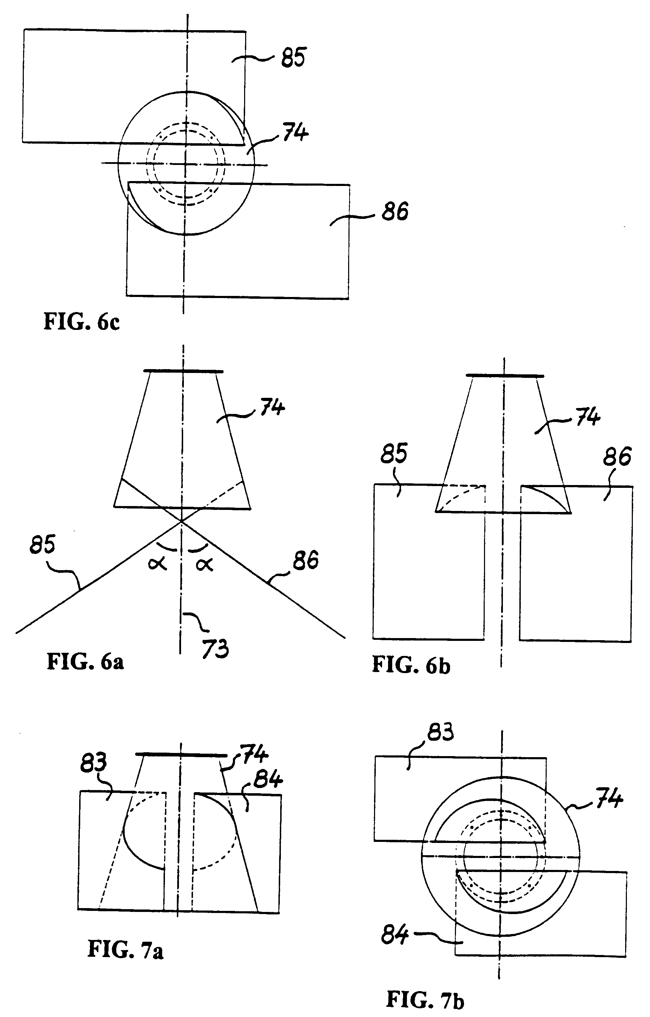

Figs. 6 show flat plates 85 and 86 making the same angle α with the axis of the cone 74, but placed opposite each other underneath the cone 74. Fig. 6a shows a front view, fig. 6b a side view and fig. 6c a bottom view.

Figs. 7 show two flat plates 83 and 84 making the same angle with the axis of the cone 74, but positioned opposite each other, around the cone 74. Fig. 7a shows a side view and fig. 7b a bottom view.

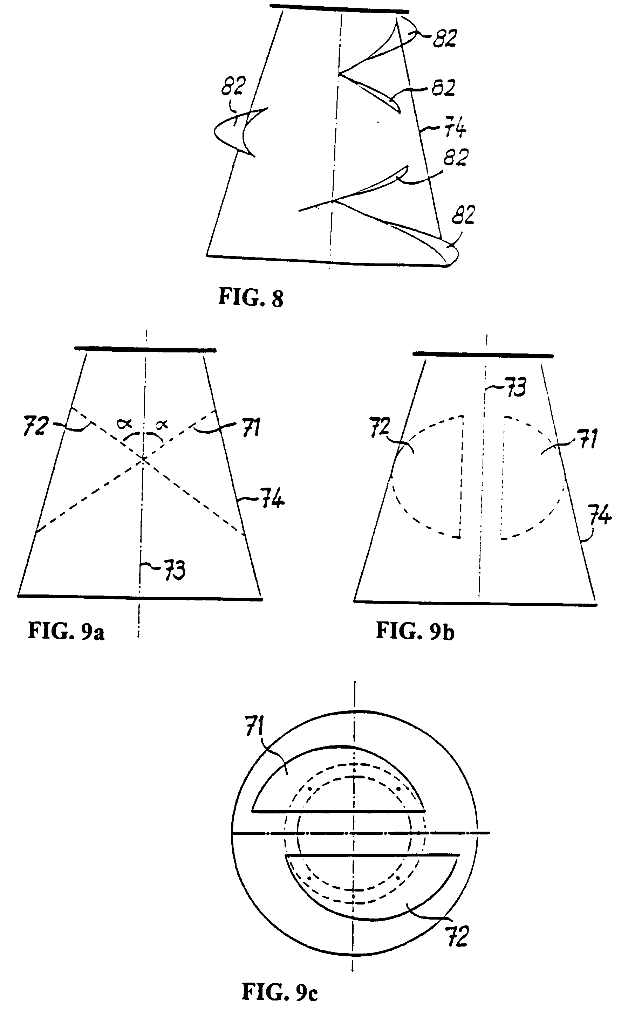

Fig. 8 shows five screw-shaped plates 82 of different dimensions and mounted at different heights round the suction cone 74.

Figs. 9 show two flat plates 71 and 72 in the form of a half oval, making the same angle α with the axis 73 of the cone 74 of the device, but positioned opposite each other. Fig. 9a shows a side view, fig. 9b a front view and fig. 9c a bottom view.

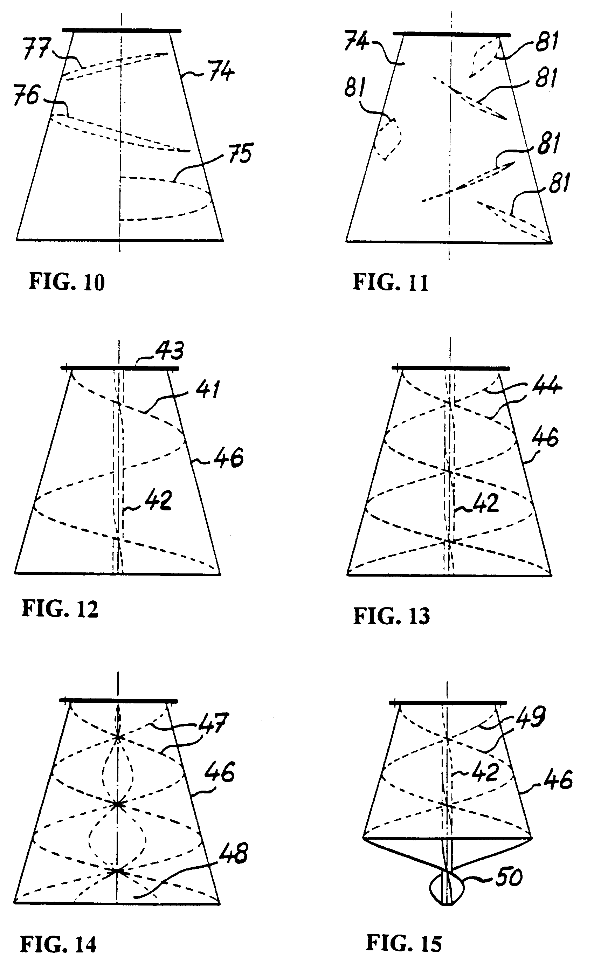

Fig. 10 shows three flat plates 75, 76 and 77 mounted in the cone 74 at the same angle to the axis but rotated 120° with respect to each other.

Fig. 11 shows five screw-shaped plates 81 of different dimensions and mounted at different heights in the suction cone 74.

Fig. 12 shows a single-threaded screw 41 with varying diameter, mounted round a tube 42 in the cone 46 of the device and attached to the top collar 43 of the cone.

Fig. 13 shows a double-threaded screw 44 with varying diameter, located round a tube 42 in the cone 46 of the device; fig. 14 shows a double-threaded screw 47 with varying diameter, open in the middle 48, located in the cone 46 of the device; fig. 15 shows a double-threaded screw 49 with varying diameter, located round a tube 42, with the screw running partly underneath the cone 46 and ending in a part with small diameter. The part of the screw underneath the cone is indicated in the drawing by reference number 50.

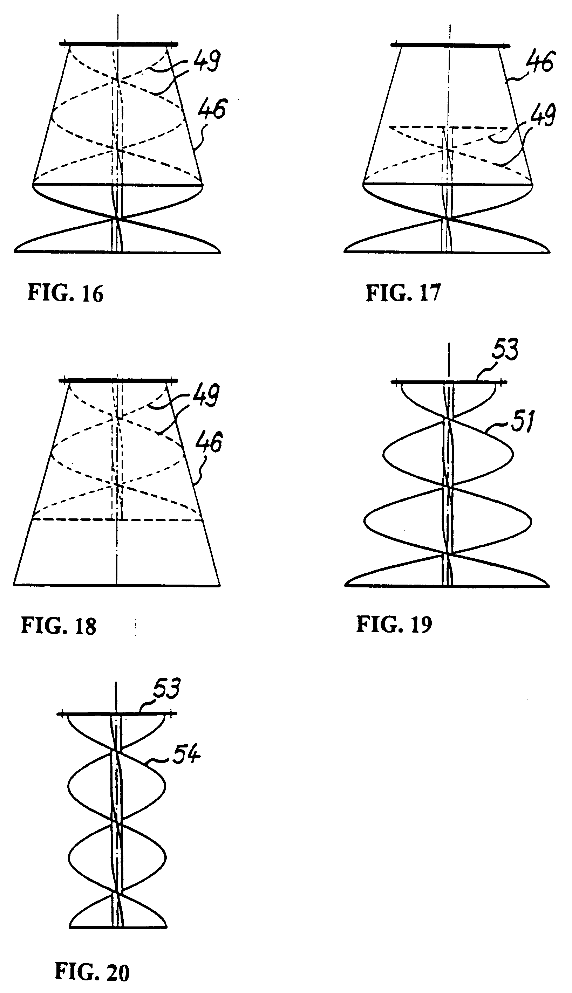

Figs. 16, 17 and 18 show variants of the example described in fig. 15. In fig. 16, the screw 49 simply continues underneath the cone 46 with a constant variation in diameter. In fig. 17 the screw 49 begins approximately half way down the cone, and in fig. 18 the screw 49 ends approximately half way down the cone 46.

Figs. 19 and 20 show a screw mounted underneath the pump housing 5 of the device, where the device does not have a cone.

Fig. 19 shows a double-threaded screw 51 with variable diameter, attached to a collar 53 mounted underneath the pump housing (not shown).

In fig. 20, the screw is a double-threaded screw 54 with constant diameter.

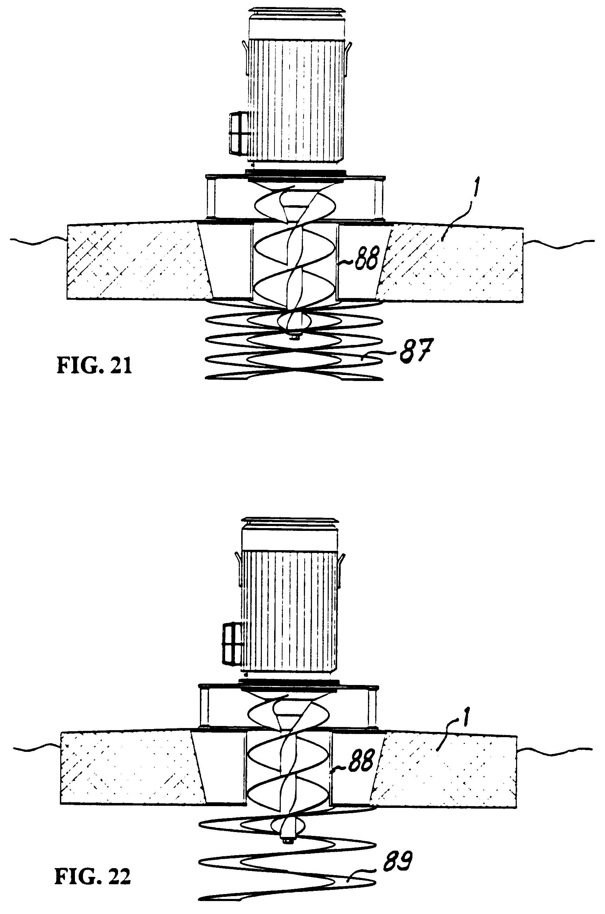

Fig. 21 shows a device with a double-threaded, screw-shaped guide 87 underneath the pump housing 88 of an aerator in which the pump housing is only partially present and has height equal to the height of the float 1.

Fig. 22 is a variant of fig. 21, in which the guide 89 is a single-threaded screw.

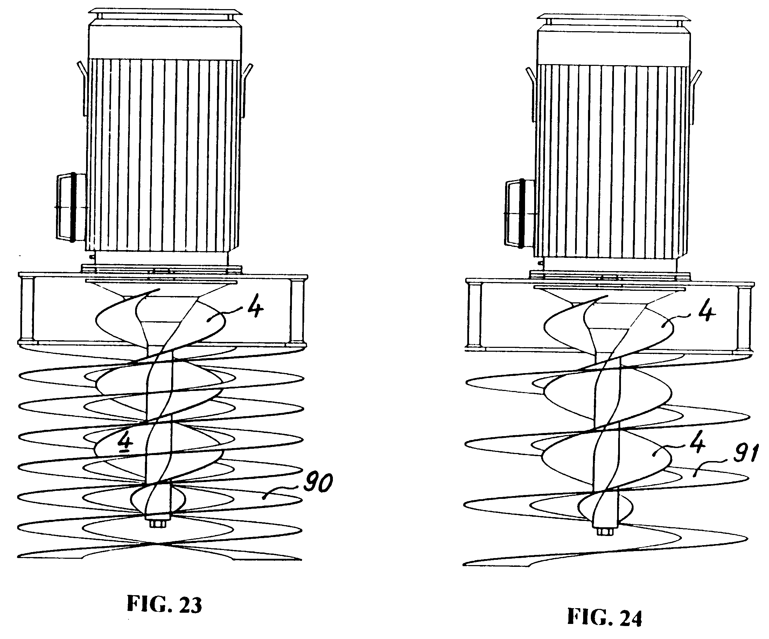

Fig. 23 shows a device with a double-threaded, screw-shaped guide 90 round the centrifugal screw impeller 4, for an aerator without pump housing.

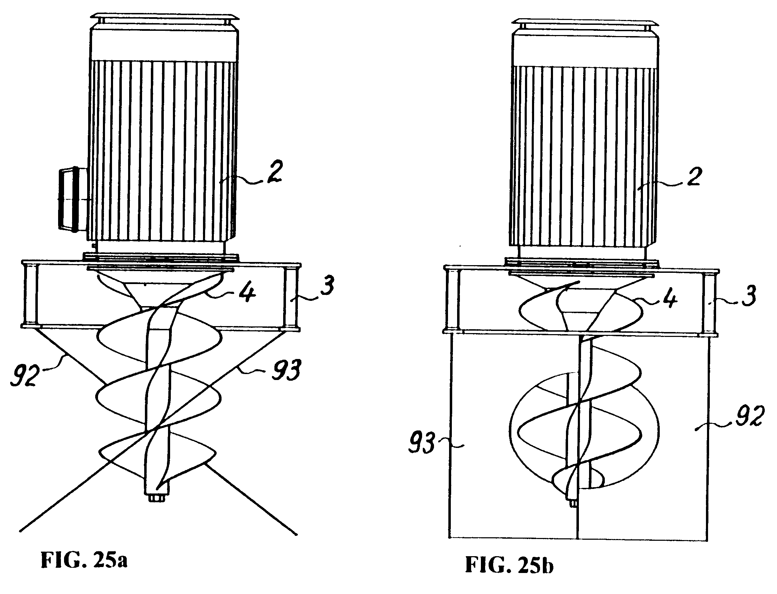

Fig. 24 is a variant of fig. 23, in which the guide 91 is a single-threaded screw.

Figs. 25 show a device without pump housing, in which the guides are flat plates 92 and 93, mounted underneath the intervening flange 3, round the centrifugal screw impeller, at the same angle to the axis of the centrifugal screw impeller 4 but opposite each other. Fig. 25a shows a front view and fig. 25b a side view.

Further examples can consist of possible combinations of the examples described above.

These examples show that a man skilled in the art has plenty of possibilities, both as regards screw-shaped guides and as regards plate-shaped guide elements. Both the shape of the plates and their number can vary.

It may also be possible to fit additional guide means on the bottom and on the walls of the basin.

What is important is to choose the shape and the position so that the horizontal or vertical direction of rotation of the water in the basin is combined to obtain a waltzing or roller motion.

Clearly, the invention can be applied to any device that is used as an aerator or mixer, or to any device which - as mentioned under prior art - may be used either as aerator or as mixer.

## Claims

1. Device for aerating and/or mixing water in a basin (7), comprising an impeller organ which impart a rotational motion to the water, characterised in that the device comprises guide means which convert the rotational motion of the water into a combined horizontal and vertical motion being formed like an helicoïdal movement having an axis which forms a curve around the device or its extension.

2. Device according to claim 1, characterised in that the guide means are plate-shaped elements (85-86).

3. Device according to claim 1, characterised in that the guide means are screw-shaped elements (57-59).

4. Device according to claim 1, having a pump housing and impeller organ, characterised in that the guide means are mounted on the device, underneath the pump housing.

5. Device according to claim 4, having a pump housing (5), an impeller organ (4) and a suction cone (6), characterised in that the guide means are mounted on the device at least partly round the suction cone.

6. Device according to claim 4, having a pump housing (5), an impeller organ (4) and a suction cone (6), characterised in that the guide means are mounted on the device at least partly inside the suction cone.

7. Device according to claim 2, having an impeller organ (4), a pump housing (5) and a suction cone (6), characterised in that the plate-shaped elements are flat plates, placed at least partly underneath the suction cone, with the same angle regarding the axis of the cone.

8. Device according to claim 1, having a centrifugal screw impeller (4) without pump housing and without suction cone, characterised in that the guide elements (91, 92, 93, 94) are placed at least partly round the centrifugal screw impeller (4)

9. Method for aerating and/or mixing water in a basin with the help of a device that imparts a rotational motion to the water, characterised in that static screw-shaped or plate-shaped guide means placed on the device convert the rotational motion of the water into a combined horizontal and vertical motion being formed like a helicoïdal movement having an axis which forms a curve around the device or its extension.

## Patentansprüche

1. Vorrichtung zum Belüften und/oder Mischen von Wasser in einem Becken (7), die ein Rührorgan aufweist, das dem Wasser eine Drehbewegung erteilt,
dadurch **gekennzeichnet,** daß
die Vorrichtung Führungseinrichtungen aufweist, welche die Drehbewegung des Wassers in eine kombinierte horizontale und vertikale Bewegung umwandeln, die in der Art einer schraubenförmigen Bewegung mit einer Achse ausgebildet ist, die eine Krümmung um die Vorrichtung oder deren Erstreckung bildet.

2. Vorrichtung nach Anspruch 1,
dadurch **gekennzeichnet,** daß
die Führungseinrichtungen plattenförmige Elemente (85-86) sind.

3. Vorrichtung nach Anspruch 1,
dadurch **gekennzeichnet,** daß
die Führungseinrichtungen schraubenförmige Elemente (57-59) sind.

4. Vorrichtung nach Anspruch 1 mit einem Pumpengehäuse und einem Rührorgan,
dadurch **gekennzeichnet,** daß
die Führungseinrichtungen an der Vorrichtung unterhalb des Pumpengehäuses angebracht sind.

5. Vorrichtung nach Anspruch 4 mit einem Pumpengehäuse (5), einem Rührorgan (4) und einem Saugkegel (6),
dadurch **gekennzeichnet,** daß
die Führungseinrichtungen an der Vorrichtung wenigstens teilweise um den Saugkegel herum angebracht sind.

6. Vorrichtung nach Anspruch 4 mit einen Pumpengehäuse (5), einem Rührorgan (4) und einem Saugkegel (6),
dadurch **gekennzeichnet,** daß
die Führungseinrichtungen an der Vorrichtung wenigstens teilweise innerhalb des Saugkegels angebracht sind.

7. Vorrichtung nach Anspruch 2 mit einem Rührorgan (4), einem Pumpengehäuse (5) und einem Saugkegel (6),
dadurch **gekennzeichnet,** daß
die plattenförmigen Elemente ebene Platten sind, die wenigstens teilweise unterhalb des Saugkegels mit dem gleichen Winkel bezüglich der Achse des Kegels angeordnet sind.

8. Vorrichtung nach Anspruch 1 mit einem Zentrifugalschraubenrührflügel (4), ohne ein Pumpengehäuse und ohne einen Saugkegel,
dadurch **gekennzeichnet,** daß
die Führungselemente (91, 92, 93, 94) wenigstens teilweise um den Zentrifugalschraubenrührflügel (4) angeordnet sind.

9. Verfahren zum Belüften und/oder Mischen von Wasser in einem Becken mit Hilfe einer Vorrichtung, die dem Wasser eine Drehbewegung erteilt,
dadurch **gekennzeichnet,** daß
feststehende schraubenförmige oder plattenförmige Führungseinrichtungen, die an der Vorrichtung angeordnet sind, die Drehbewegung des Wassers in eine kombinierte horizontale und vertikale Bewegung umwandeln, die in der Art einer schraubenförmigen Bewegung mit einer Achse ausgebildet ist, die eine Krümmung um die Vorrichtung oder ihre Erstreckung bildet.

## Revendications

1. Dispositif d'aération et/ou de mélange d'eau dans un bassin (7) comprenant une roue qui imprime à l'eau un mouvement de rotation, caractérisé en ce que le dispositif comprend des guides qui convertissent le mouvement de rotation de l'eau en un mouvement combiné horizontal et vertical ayant la forme d'un mouvement hélicoïdal dont l'axe forme une courbe autour du dispositif ou de son extension.

2. Dispositif suivant la revendication 1, caractérisé en ce que les guides sont des éléments en forme de plaques (85-86).

3. Dispositif suivant la revendication 1, caractérisé en ce que les guides sont éléments en forme de vis (57-59).

4. Dispositif suivant la revendication 1, possédant un corps de pompe et une roue, caractérisé en ce que les guides sont montés sur le dispositif, en dessous du corps de pompe.

5. Dispositif suivant la revendication 4, possédant un corps de pompe (5), une roue (4) et un cône d'aspiration (6), caractérisé en ce que les guides sont montés sur le dispositif au moins partiellement autour du cône d'aspiration.

6. Dispositif suivant la revendication 4, possédant un corps de pompe (5), une roue (4) et un cône d'aspiration (6), caractérisé en ce que les guides sont montés sur le dispositif au moins partiellement à l'intérieur du cône d'aspiration.

7. Dispositif suivant la revendication 2, possédant une roue (4), un corps de pompe (5) et un cône d'aspiration (6), caractérisé en ce que les éléments en forme de plaques sont des plaques plates, placées au moins partiellement en dessous du cône d'aspiration, avec le même angle par rapport à l'axe du cône.

8. Dispositif suivant la revendication 1, possédant une roue hélice (4) sans corps de pompe et sans cône d'aspiration, caractérisé en ce que les guides (91, 92, 93, 94) sont placés au moins partiellement autour de la roue hélice (4).

9. Méthode d'aération et/ou de mélange d'eau dans un bassin avec l'aide d'un dispositif qui imprime à l'eau un mouvement de rotation, caractérisée en ce que des guides statiques en forme de vis ou en forme de plaques placés sur le dispositif convertissent le mouvement de rotation de l'eau en un mouvement combiné horizontal et vertical ayant la forme d'un mouvement hélicoïdal dont l'axe forme une courbe autour du dispositif ou de son extension.
